# EUROPÄISCHE PATENTSCHRIFT

(11) **EP 2 013 889 B1**
(45) Veröffentlichungstag und Bekanntmachung des Hinweises auf die Patenterteilung: **16.06.2010**
(21) Anmeldenummer: 07723861.6
(22) Anmeldetag: 31.03.2007
(51) Int. Cl.: H01H 19/14, B60K 37/06, G05G 1/10

(54) **DREHSTELLER FÜR EIN KRAFTFAHRZEUG MIT JOG-SHUTTLE-FUNKTIONALITÄT**
ROTARY ACTUATOR WITH JOG/SHUTTLE-FUNCTIONALITY FOR A MOTOR VEHICLE
ACTIONNEUR ROTATIF POUR UN VÉHICULE AUTOMOBILE AVEC FOCTIONNALITÉ JOG/SHUTTLE

(30) Priorität: 21.04.2006 DE 102006018521
(43) Veröffentlichungstag der Anmeldung: 14.01.2009
(73) Patentinhaber: Preh GmbH, 97616 Bad Neustadt a. d. Saale (DE)
(72) Erfinder: SCHUBERTH, Stefan, 97616 Bad Neustadt a.d. Saale (DE); NAUTH, Jürgen, 97705 Stangenroth (DE); KRAMLICH, Andreas, 97424 Schweinfurt (DE)
(74) Vertreter: Bauer, Wulf
(86) Internationale Anmeldenummer: PCT/EP2007/002920
(87) Internationale Veröffentlichungsnummer: WO 2007/121829

(56) Entgegenhaltungen:
- EP-A- 0 834 635
- DE-A1- 4 018 686
- US-A1- 2007 062 790

## Beschreibung

Die vorliegende Erfindung betrifft einen Drehsteller mit Jog-Shuttle-Funktionalität für ein Kraftfahrzeug.

Bedienelemente mit Jog-Shuttle-Funktionalität sind beispielsweise aus dem Bereich des Videoschnitts bekannt. Im Jog-Modus wird dabei das Video bei Drehung des Bedienelementes um einen bestimmten Winkel oder eine Raste um ein Bild vorwärts oder rückwärts bewegt. Im Shuttle-Modus wird das Bedienelement aus einer Nulllage ausgelenkt und das Video kontinuierlich mit einer Geschwindigkeit, die abhängig ist von der Auslenkung des Bedienelementes aus der Nulllage, vorwärts oder rückwärts abgespielt. Wird das Bedienelement losgelassen, kehrt es automatisch in die Nulllage zurück. Die wirkende Rückstellkraft steigt üblicherweise mit der Auslenkung aus der Nulllage. Dabei weist das Bedienelement für die beiden Modi unterschiedliche Handhaben auf. Die Handhabe für den Shuttle-Modus ist üblicherweise als Ring ausgebildet, in dem die scheibenförmige Handhabe für den Jog-Modus angeordnet ist.

Ein gattungsgemäßes Bedienelement mit Jog-Shuttle-Funktionalität ist auch vorteilhaft in einem Kraftfahrzeug einsetzbar, beispielsweise zur Steuerung einer Markierung in einem Auswahlmenü oder zur Einstellung eines Parameters. Die Bedienung der beiden Modi Jog und Shuttle mittels zweier verschiedener Handhaben ist jedoch nachteilig, insbesondere bei einem sich bewegenden Kraftfahrzeug. Darüber hinaus wird der Bereich des Bedienelements, in dem bei bekannten Ausführungsformen die Handhabe zur Betätigung des Jog-Modus angeordnet ist, bei in Kraftfahrzeugen verwendeten Bedienelementen oftmals für die Darstellung von Symbolen oder die Anbringung eines Drucktasters verwendet.

In der EP 0 834 635 A1 ist ein Drehsteller mit Jog-Shuttle-Funktionalität für ein kraftfahrzeug gemäß dem Oberbegriff des Auspruchs 1 offenbart.

Es ist daher die Aufgabe der vorliegenden Erfindung, einen Drehsteller mit zuschaltbarer Jog-Shuttle-Funktionalität für ein Kraftfahrzeug bereitzustellen, bei dem beide Modi mittels einer einzigen Handhabe betätigbar sind.

Gelöst wird diese Aufgabe durch einen Drehsteller gemäß Patentanspruch 1. Weitere vorteilhafte Ausgestaltungsformen sind den abhängigen Patentansprüchen zu entnehmen.

Ein erfindungsgemäßer Drehsteller mit zuschaltbarer Jog-Shuttle-Funktionalität besteht im Wesentlichen aus einer um eine Achse drehbaren Handhabe, einen innerhalb der Handhabe angeordneten, um die gleiche Achse drehbaren Codierring, mindestens ein an der Handhabe angeordnetes elastisches Element, das in dauerhafter Berührung mit dem Codierring steht, sowie Mittel zur Blockierung der Drehung des Codierrings unabhängig von der Drehung der Handhabe.

Im Jog-Modus ist der Codierring frei drehbar. Durch die Berührung zwischen dem elastischen Element und dem Codierring erfolgt eine Kraftübertragung, sodass der Codierring einer Drehung der Handhabe folgt. Im Shuttle-Modus wird die Drehung des Codierrings blockiert. Eine Drehung der Handhabe führt daher zu einer relativen Bewegung zwischen der Handhabe und dem Codierring, wobei das elastische Element verformt wird. Diese Verformung des elastischen Elements bewirkt eine Rückstellkraft auf die Handhabe und damit eine erhöhte Kraft, die der Benutzer zur Drehung der Handhabe aufbringen muss. Die Position, in der die Drehung des Codierrings blockiert wird, wird als Nulllage bezeichnet und kann an jeder beliebigen Drehposition der Handhabe liegen.

Bevorzugt ist die Handhabe im Wesentlichen ringförmig ausgebildet. Der Drehsteller weist dadurch keine Vorzugsrichtung auf und ist damit universell einsetzbar. Ein weiterer Vorteil des erfindungsgemäßen Drehstellers liegt darin, dass die Aktivierung des Shuttle-Modus in jeder beliebigen Drehstellung der Handhabe möglich ist. In vorteilhafter Weise weist die Handhabe an ihrer Außenseite Einkerbungen, Ausformungen oder Gummierungen auf, um ein Abrutschen des Benutzers zu vermeiden und eine sichere Bedienung zu gewährleisten.

In einer Ausgestaltungsform der Erfindung stellt die äußere Form des Codierrings ein gleichseitiges Vieleck dar. Ein derartiges Vieleck bietet vorteilhafte Berührungsflächen für das elastische Element. Bevorzugt hat der Codierring die äußere Form eines gleichseitigen Sechsecks. In vorteilhafter Weise sind die Ecken des regelmäßigen Vielecks abgerundet. Dadurch wird ein verbesserter Berührungskontakt zwischen dem elastischen Element und dem Codierring erreicht. Alternativ stellt die äußere Form des Codierrings im Wesentlichen ein Oval dar, wobei das elastische Element bevorzugt an einer Längsseite des Ovals angreift. Optional weist der äußere Umfang des Codierrings zumindest bereichsweise Nuten auf, in denen das elastische Element geführt wird.

Bevorzugt handelt es sich bei dem elastischen Element um eine Feder, insbesondere um eine Blattfeder oder Stabfeder. In vorteilhafter Weise bildet die Feder eine Sehne der Handhabe. Bei freier Drehung des Codierrings liegt die Feder an einer Außenkante des Codierrings an und dreht diesen entsprechend der Drehung der Handhabe mit. Ist die Drehung des Codierrings blockiert, so führt eine Drehung der Handhabe dazu, dass die Feder gespannt wird und dadurch die gewünschte Gegenkraft auf die Handhabe ausübt.

Bei dem Mittel zur Blockierung der Drehung des Codierrings handelt es sich bevorzugt um einen Elektromagneten. Mittels des Elektromagneten wird beispielsweise ein Stößel oder eine Kugel in Eingriff mit einer Kontur am Codierring gebracht, wodurch die Drehung blockiert wird.

Bevorzugt weist der Drehsteller Mittel zur Erzeugung einer Drehrast auf. Durch die Drehrast wird dem Benutzer haptisch signalisiert, dass er die Handhabe weit genug gedreht hat, um die gewünschte Funktion, beispielsweise die Verschiebung einer Markierung, auszuführen. Die Drehrast wird beispielsweise durch eine in die Handhabe eingebrachte Rastkontur und eine in die Rastkontur eingreifende Feder erzeugt. Derartige Mittel zur Erzeugung einer Drehrast sind dem Fachmann bekannt und werden daher an dieser Stelle nicht detailliert dargestellt. Bevorzugt erfolgt die Blockierung der Drehung des Codierrings in einer Drehstellung, bei der sich die Handhabe in einer Drehrast befindet.

In einer weiteren bevorzugten Ausführungsform der Erfindung weist der Drehsteller Mittel zur Erzeugung eines Endanschlags für die Handhabe auf. Bei diesen Mitteln handelt es sich beispielsweise um eine Kugel, die sich in einem Profil verklemmt, einen zustellbaren Stößel, eine andere Art mechanischer Bremse oder eine elektromagnetische Bremse. Im Jog-Modus des Drehstellers wird der Endanschlag beispielsweise dazu verwendet, dem Benutzer haptisch das Ende einer Auswahlliste zu signalisieren. Im Shuttle-Modus wird mittels des Endanschlags beispielsweise die Auslenkung der Handhabe aus der Nulllage begrenzt.

Zur Begrenzung der Relativbewegung zwischen dem Codierring und der Handhabe im Shuttle-Modus weist der Codierring alternativ oder zusätzlich mindestens eine Ausnehmung auf, in die eine an der Handhabe angeordnete Nase eingreift. Die Nase ist in der Ausnehmung beweglich geführt, sodass die Relativbewegung an sich zugelassen wird. Bei Erreichen der maximalen Relativbewegung und damit der maximalen Auslenkung der Handhabe aus der Nulllage stößt die Nase an einen Rand der Ausnehmung im Codierring und verhindert eine weitere Drehung der Handhabe. Selbstverständlich ist es möglich, die Ausnehmung in der Handhabe und die Nase am Codierring anzuordnen.

Die Erfindung soll anhand zweier Ausführungsbeispiele näher erläutert werden. Dabei zeigt
- Figur 1: einen Schnitt durch einen erfindungsgemäßen Drehsteller im Jog-Modus,
- Figur 2: den Drehsteller aus Figur 1 im Shuttle-Modus,
- Figur 3: einen Schnitt durch einen weiteren erfindungsgemäßen Drehsteller im Jog- Modus,
- Figur 4: den Drehsteller aus Figur 3 im Shuttle-Modus,
- Figur 5: den Drehsteller aus Figur 3 und 4 im Teilschnitt und
- Figur 6: die Kraftverläufe für beide Modi über dem Drehwinkel.

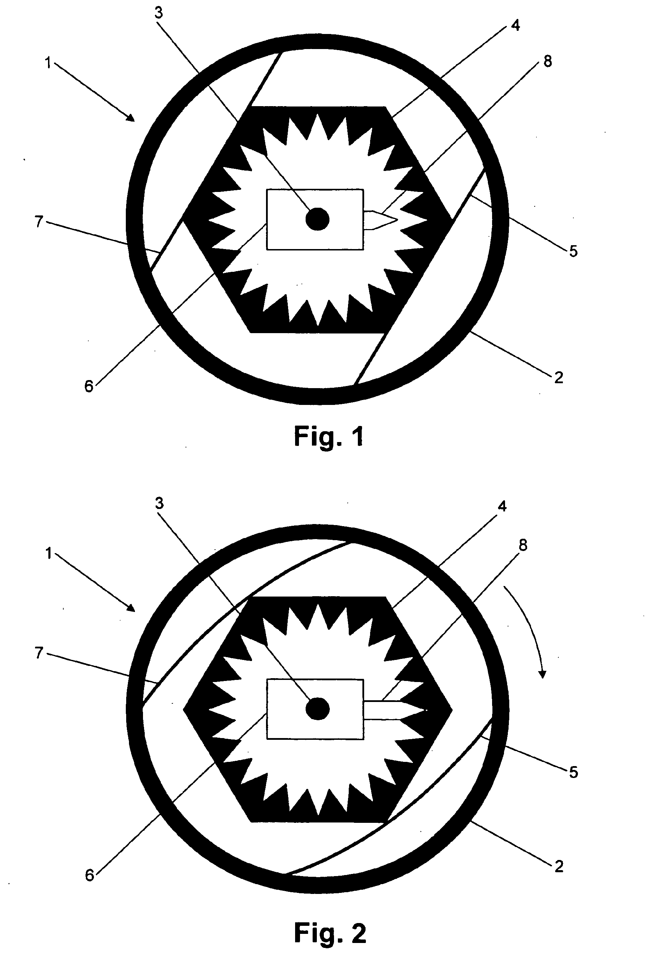

Figur 1 zeigt schematisch einen Schnitt durch einen erfindungsgemäßen Drehsteller 1 mit einer Handhabe 2 und einem Codierring 4, dessen äußerer Umfang die Form eines gleichseitigen Sechsecks aufweist. Die Handhabe 2 und der Cordierring 4 sind unabhängig voneinander um die Achse 3 drehbar. An der Handhabe 2 angeordnet sind zwei stabförmige Federn 5 und 7, die bezogen auf den inneren Umfang der Handhabe 2 Sehnen bilden. Die Kanten des Codierrings 4 weisen Nuten auf, in denen die Federn 5 und 7 geführt werden. Die Drehung des Codierrings 4 ist mittels eines Permanentmagneten 6 blockierbar, der einen Stößel 8 in Eingriff mit einer Rastkontur im Codierring 4 bringen kann.

In dem in Figur 1 dargestellten Jog-Modus ist der Magnet 6 nicht angesteuert, so dass sich der Codierring 4 frei drehen kann. Die Federn 5 und 7 liegen im Wesentlichen über die gesamte Länge der Kanten am Codierring 4 an und übertragen eine Drehung der Handhabe 2 auf den Codierring 4, weshalb sich beide mit gleicher Winkelgeschwindigkeit drehen.

In die Handhabe 2 ist ein nicht dargestelltes Rastprofil eingebracht, in das eine ebenfalls nicht dargestellte Rastfeder eingreift, um eine Drehrast zu erzeugen. Eine derartige Rasterzeugung ist im Stand der Technik bekannt und wird daher an dieser Stelle nicht detailliert erläutert.

Im Folgenden wird in allen Ausführungsbeispielen mit Nullstellung die Position bezeichnet, in der die Drehung des Codierrings 4 blockiert wurde.

In Figur 2 ist der Drehsteller 1 im Shuttle-Modus dargestellt, in dem der Magnet 6 bestromt ist und der Stößel 8 in die im Codierring 4 eingebrachte Rastkontur eingreift. Dadurch wird die Drehung des Codierrings 4 blockiert. Nach dem Blockieren der Drehung des Codierrings 4 wurde die Handhabe 2 gegen den Uhrzeigersinn gedreht, so dass eine Relativbewegung zwischen dem Codierring 4 und der Handhabe 2 stattgefunden hat. Die Federn 5 und 7 liegen nicht mehr an den Kanten des Codierrings 4 an, sondern werden jeweils von einer Ecke des Codierrings 4 verformt. Dieser Verformung setzen die Federn 5 und 7 eine Gegenkraft entgegen, die der Benutzer bei der Drehung der Handhabe 2 zusätzlich zu der durch die Drehrast erzeugte Kraft überwinden muss und die eine Rückstellkraft auf die Handhabe 2 ausübt. Diese Kraft ist abhängig von der relativen Verdrehung zwischen der Handhabe 2 und dem Codierring 4, der geometrischen Ausgestaltung des Codierrings 4 sowie der Form und den Materialeigenschaften der Federn 5 und 7.

Bevorzugt sind im Drehsteller 1 in den Figuren nicht dargestellte Mittel zur Erzeugung eines Endanschlags vorgesehen, beispielsweise ein zustellbarer Stößel oder eine sich verklemmende Kugel. In vorteilhafter Weise wird der Endanschlag bei einer festgelegten Auslenkung der Handhabe 2 aus der Nullstellung, beispielsweise bei drei Rasten, zugeschaltet. Dadurch wird die maximale Auslenkung der Handhabe 2 aus der Nullstellung begrenzt. Damit wird unter anderem verhindert, dass die Handhabe 2 soweit gedreht wird, dass sich die Ecken des Codierrings 4 über die Mitten der Federn 5 und 7 hinausbewegen. Dies hätte zur Folge, dass die Federn 5 und 7 die Handhabe 2 selbsttätig noch weiter drehen, bis die Federn 5 und 7 an den nächsten Kanten des Codierrings 4 anliegen.

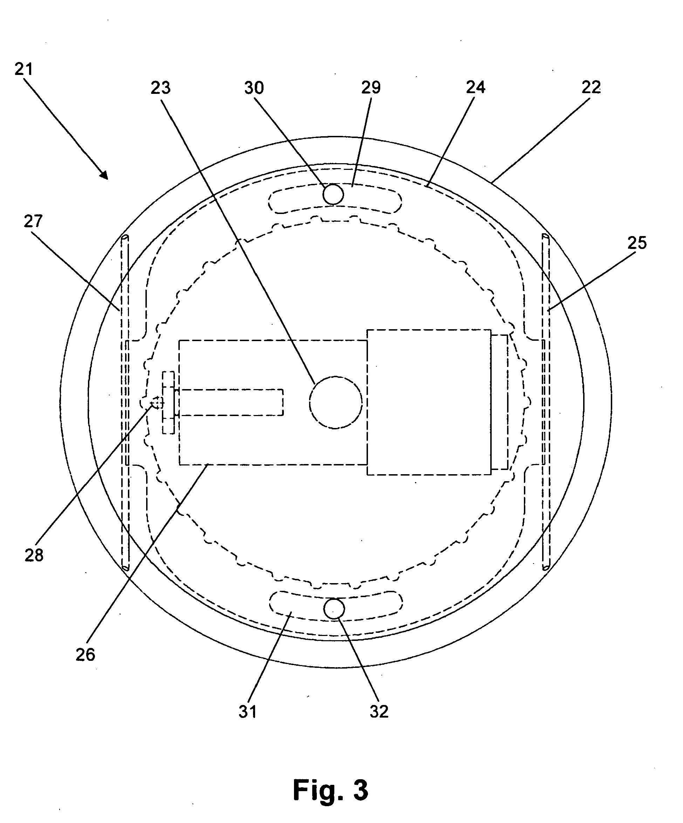

Figur 3 zeigt einen Schnitt durch einen weiteren erfindungsgemäßen Drehsteller 21 mit einer Handhabe 22 und einem Codierring 24, die unabhängig voneinander um die Achse 23 drehbar sind. Im Gegensatz zum Drehsteller 1 aus den Figuren 1 und 2 weist die Außenkontur des Codierrings 24 im Wesentlichen die Form eines Ovals auf. Dabei sind an die Längsseiten des Ovals Vorsprünge angeformt, deren Außenkante parallel zu den Längsseiten des Ovals verlaufen. An der Handhabe 22 angeordnet sind zwei stabförmige Federn 25 und 27, die bezogen auf den inneren Umfang der Handhabe 22 Sehnen bilden und die im in Figur 3 dargestellten Jog-Modus im Wesentlichen flach an den Vorsprüngen des Codierrings 24 anliegen. Die Kanten des Codierrings 24 weisen zumindest bereichsweise Nuten auf, in denen die Federn 25 und 27 geführt werden. Dadurch wird gewährleistet, dass die Federn 25 und 27 nicht vom Codierring 24 abrutschen können. Die Drehung des Codierrings 24 ist mittels eines Permanentmagneten 26 blockierbar. Dazu ist ein Stößel 28 in Eingriff mit einer Rastkontur bringbar, die am Codierring 24 ausgeformt ist.

In dem in Figur 3 dargestellten Jog-Modus ist der Magnet 26 nicht angesteuert, so dass sich der Codierring 24 frei drehen kann. Die Federn 25 und 27 übertragen eine Drehung der Handhabe 22 auf den Codierring 24, weshalb sich beide mit gleicher Winkelgeschwindigkeit drehen. In die Handhabe 22 ist ein nicht dargestelltes Rastprofil eingebracht, in das eine ebenfalls nicht dargestellte Rastfeder eingreift um eine Drehrast zu erzeugen. Eine derartige Rasterzeugung ist im Stand der Technik bekannt und wird daher an dieser Stelle nicht detailliert erläutert.

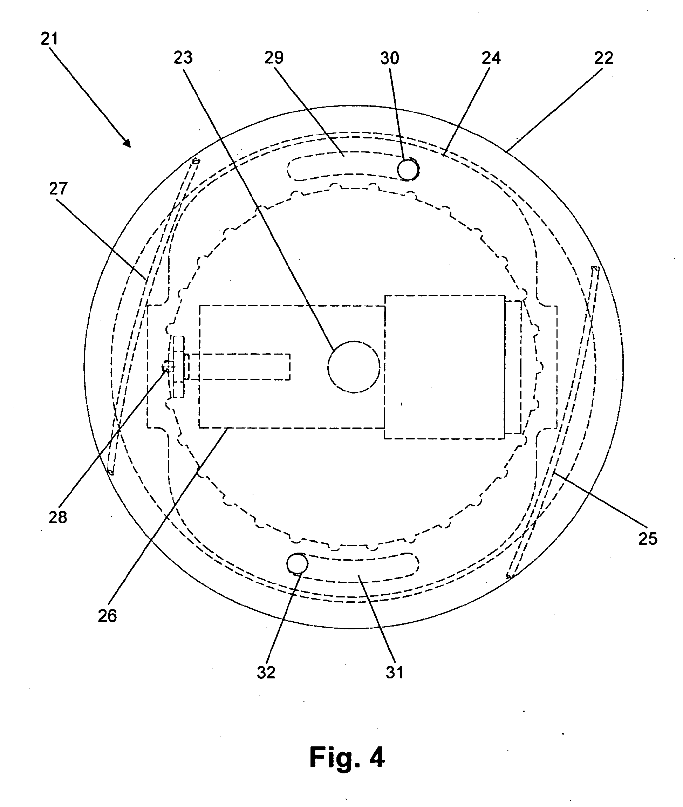

In Figur 4 ist der Drehsteller 21 im Shuttle-Modus dargestellt, in dem der Magnet 26 bestromt ist und der Stößel 28 in eine im Codierring 24 eingebrachte Rastkontur eingreift. Dadurch wird die Drehung des Codierrings 24 blockiert. Nach dem Blockieren der Drehung des Codierrings 24 wurde die Handhabe 22 im Uhrzeigersinn gedreht, so dass eine Relativbewegung zwischen dem Codierring 24 und der Handhabe 22 stattgefunden hat. Dies erzeugt aufgrund der Federn 25 und 27 eine Rückstellkraft auf die Handhabe 22, wie es vorstehend analog für den Drehsteller 1 beschrieben ist.

In den Codierring 24 sind zwei Ausnehmungen 29 und 31 eingebracht. In die Ausnehmung 29 taucht eine Nase 30 und in die Ausnehmung 31 eine Nase 32 ein, wobei die Nasen 30 und 32 an der Handhabe 22 angeordnet sind. Bei einer Relativbewegung zwischen der Handhabe 22 und dem Codierring 24 bewegen sich die Nasen in den jeweiligen Ausnehmungen. Durch die Form der Ausnehmungen 29 und 31 ist der Bewegungsspielraum der Nasen 30 und 32 und damit die maximale Verdrehung zwischen Handhabe 22 und Codierring 24 begrenzt. In Figur 4 ist die Handhabe 22 so weit gegen den Codierring verdreht, dass die Nase 30 an den rechten Rand der Ausnehmung 29 und die Nase 32 an den linken Rand der Ausnehmung 31 anschlägt. Dadurch wird ein weiteres Drehen der Handhabe 22 über ein gewünschtes maximales Maß hinaus verhindert.

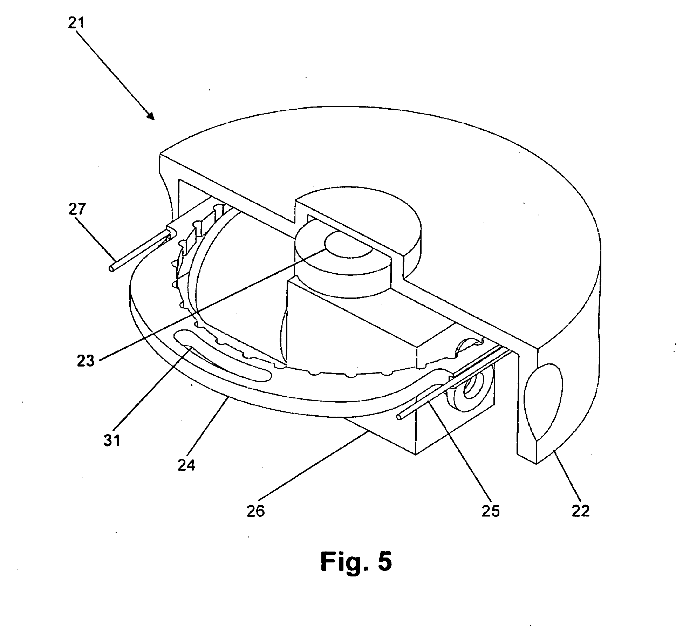

Figur 5 zeigt einen Teilschnitt durch das Bedienelement 21 aus den Figuren 3 und 4. Gut zu erkennen ist der konzentrische Aufbau des Codierrings 24 und der Handhabe 22, die um die gemeinsame Achse 23 drehbar sind. Die im Schnitt in Figur 5 frei dargestellten Enden der Federn 25 und 27 sind in der Handhabe 22 fixiert.

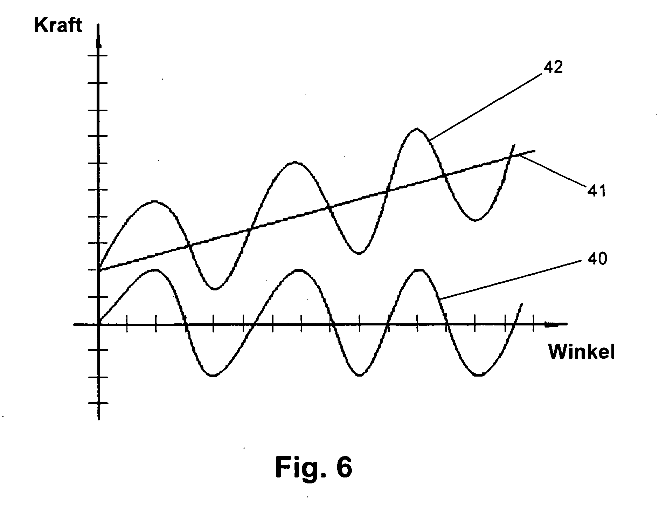

Figur 6 zeigt die Kraftverläufe im Drehsteller 1 über dem Drehwinkel. Der Drehwinkel gibt die Auslenkung der Handhabe 2 aus der Nulllage und somit die Verdrehung zwischen Codierring 4 und Handhabe 2 an. Die Kurve 40 beschreibt die durch die Drehrast erzeugte wellenförmige Kraft. Im vorliegenden Beispiel ist die Rastkontur in der Handhabe 2 so ausgebildet, das alle sechs Grad eine Rast auftritt. Die Kurve 41 zeigt schematisch die von den Federn 5 und 7 auf die Handhabe 2 ausgeübte Kraft. Diese steigt, je weiter die Handhabe 2 bezogen auf den Codierring 4 verdreht, also aus der Nulllage ausgelenkt wird. Die als Kurve 42 dargestellte resultierende Kraft ist die Summe aus den beiden vorstehenden beschriebenen Kräften. Diese resultierende Kraft muss der Benutzer aufbringen, um die Handhabe 2 aus der aktuellen Position noch weiter gegen den Codierring 4 zu verdrehen. Durch diese resultierende Kraft wird dem Benutzer haptisch signalisiert, wie weit die Handhabe 2 aus der Nullstellung herausgedreht wurde.

Lässt der Benutzer die Handhabe 2 los, so bewirkt die von den Federn 5 und 7 ausgeübte Kraft eine Rückführung der Handhabe 2 in die Nullstellung, solange diese Kraft ausreicht, die von der Rastfeder erzeugte Kraft zu überwinden und die Handhabe in die nächste Rast zu drehen. Die Kraftverläufe bei einem Drehsteller 21 sind identisch oder ähnlich denen beim Drehsteller 1. Die in Figur 6 dargestellten Kräfte sind daher als beispielhaft für alle erfindungsgemäßen Drehsteller anzusehen.

Das vorstehend beschriebene Ausführungsbeispiel ist rein exemplarisch und insofern nicht beschränkend. Insbesondere können die Handhabe 2, 22, der Codierring 4, 24 sowie die Federn 5, 7, 25 und 27 andere Formen aufweisen. Die Blockierung der Drehung des Codierrings 4, 24 kann durch andere Mittel als den dargestellten Elektromagneten 6, 26 erfolgen. Auch die Wahl der Mittel zur Erzeugung der optionalen Drehrast sowie des Endanschlags sind dem Fachmann überlassen. Die Ausnehmungen in dem Codierring 24 können nicht nur symmetrisch, sondern auch asymmetrisch ausgebildet sein, so dass die maximale relative Verdrehung zwischen Handhabe 22 und Codierring 24 drehrichtungsabhängig ist.

## Patentansprüche

1. Drehsteller (1, 21) mit Jog-Shuttle-Funktionalität für ein Kraftfahrzeug, aufweisend eine um eine Achse (3, 23) drehbare Handhabe (2, 22), **gekennzeichnet durch** einen innerhalb der Handhabe (2, 22) angeordneten, um die gleiche Achse (3, 23) drehbaren Codierring (4, 24), mindestens ein an der Handhabe (2, 22) angeordnetes elastisches Element (5, 7, 25, 27), das in dauerhafter Berührung mit dem Codierring (4, 24) steht, sowie Mittel (6, 26) zur Blockierung der Drehung des Codierrings (4, 24) unabhängig von der Drehung der Handhabe (2, 22).

2. Drehsteller (1, 21) nach Anspruch 1, **dadurch gekennzeichnet, dass** die Handhabe (2, 22) im Wesentlichen ringförmig ausgebildet ist.

3. Drehsteller (1) nach einem der Ansprüche 1 oder 2, **dadurch gekennzeichnet, dass** die äußere Form des Codierrings (4) ein gleichseitiges Vieleck darstellt.

4. Drehsteller (1) nach Anspruch 3, **dadurch gekennzeichnet, dass** die äußere Form des Codierrings (4) ein gleichseitiges Sechseck ist.

5. Drehsteller (1) nach einem der Ansprüche 3 oder 4, **dadurch gekennzeichnet, dass** die Ecken des regelmäßigen Vielecks abgerundet sind.

6. Drehsteller (21) nach einem der Ansprüche 1 oder 2, **dadurch gekennzeichnet, dass** die äußere Form des Codierrings (24) im Wesentlichen ein Oval darstellt.

7. Drehsteller (1, 21) nach einem der Ansprüche 1 bis 6, **dadurch gekennzeichnet, dass** es sich bei dem elastischen Element (5, 7, 25, 27) um eine Feder handelt.

8. Drehsteller (1, 21) nach Anspruch 7, **dadurch gekennzeichnet, dass** es sich bei der Feder um eine Blattfeder oder Stabfeder handelt.

9. Drehsteller (1, 21) nach Anspruch 8, **dadurch gekennzeichnet, dass** die Blattfeder eine Sehne der Handhabe (2, 22) bildet.

10. Drehsteller (1, 21) nach einem der Ansprüche 1 bis 9, **dadurch gekennzeichnet, dass** es sich beim dem Mittel (6, 26) zur Blockierung der Drehung des Codierrings um einen Elektromagneten handelt.

11. Drehsteller (1, 21) nach einem der Ansprüche 1 bis 10, **gekennzeichnet durch** Mittel zur Erzeugung einer Drehrast.

12. Drehsteller (1, 21) nach Anspruch 11, **dadurch gekennzeichnet, dass** es sich bei den Mitteln zur Erzeugung der Drehrast um eine in eine Rastkontur eingreifende Feder handelt.

13. Drehsteller (1, 21) nach einem der Ansprüche 1 bis 12, **gekennzeichnet durch** Mittel zur Erzeugung eines Endanschlags für die Handhabe (2, 22).

14. Drehsteller (21) nach einem der Ansprüche 1 bis 13, **gekennzeichnet durch** eine Ausnehmung (29, 31) im Codierring (24), in die eine an der Handhabe (22) angeordnete Nase (30, 32) eingreift.

## Claims

1. A rotary actuator (1, 21) with a jog/shuttle functionality for a motor vehicle, comprising a handle (2, 22) which is rotatable about an axis (3, 23), **characterized by** a coding ring (4, 24) that is rotatable about the same axis (3, 23) and that is disposed within said handle (2, 22), by at least one elastic element (5, 7, 25, 27) that is disposed on said handle (2, 22) and is in permanent contact with said coding ring (4, 24), as well as by means (6, 26) for blocking the rotation of the coding ring (4, 24) independent of the rotation of said handle (2, 22).

2. The rotary actuator (1, 21) as set forth in claim 1, **characterized in that** the handle (2, 22) is substantially configured in the shape of a ring.

3. The rotary actuator (1) as set forth in any one of the claims 1 or 2, **characterized in that** the outer shape of the coding ring (4) constitutes an equilateral polygon.

4. The rotary actuator (1) as set forth in claim 3, **characterized in that** the outer shape of the coding ring (4) is an equilateral hexagon.

5. The rotary actuator (1) as set forth in any one of the claims 3 or 4, **characterized in that** the angles of the regular polygon are rounded.

6. The rotary actuator (21) as set forth in any one of the claims 1 or 2, **characterized in that** the outer shape of the coding ring (24) is substantially oval.

7. The rotary actuator (1, 21) as set forth in any one of the claims 1 through 6, **characterized in that** the elastic element (5, 7, 25, 27) is a spring.

8. The rotary actuator (1, 21) as set forth in claim 7, **characterized in that** the spring is a leaf spring or a torsion rod spring.

9. The rotary actuator (1, 21) as set forth in claim 8, **characterized in that** the leaf spring forms a cord of the handle (2, 22).

10. The rotary actuator (1, 21) as set forth in any one of the claims 1 through 9, **characterized in that** the means (6, 26) for blocking the rotation of the coding ring is an electromagnet.

11. The rotary actuator (1, 21) as set forth in any one of the claims 1 through 10, **characterized by** means for generating a rotation detent.

12. The rotary actuator (1, 21) as set forth in claim 11, **characterized in that** the means for generating a rotation detent is a spring which engages into a detent contour.

13. The rotary actuator (1, 21) as set forth in any one of the claims 1 through 12, **characterized by** means for generating an end abutment for the handle (2, 22).

14. The rotary actuator (21) as set forth in any one of the claims 1 through 13, **characterized by** a recess (29, 31) in the coding ring (24) for engagement therein of a nose (30, 32) disposed on the handle (22).

## Revendications

1. Actionneur rotatif (1, 21) avec fonctionnalité jog/shuttle pour un véhicule automobile, comprenant une manette (2, 22) tournant autour d'un axe (3, 23), **caractérisé par** une bague de codage (4, 24) disposée à l'intérieur de ladite manette (2, 22) et tournant autour du même axe (3, 23), par au moins un élément élastique (5, 7, 25, 27) disposé sur la manette (2, 22) et qui est en contact permanent avec ladite bague de codage (4, 24) ainsi que par des moyens (6, 26) destinés à bloquer la rotation de ladite bague de codage (4, 24) indépendamment de la rotation de la manette (2, 22).

2. Actionneur rotatif (1, 21) selon la revendication 1, **caractérisé par le fait que** ladite manette (2, 22) est réalisée de manière à être pour l'essentiel annulaire.

3. Actionneur rotatif (1) selon l'une quelconque des revendications 1 ou 2, **caractérisé par le fait que** la forme extérieure de la bague de codage (4) constitue un polygone équilatéral.

4. Actionneur rotatif (1) selon la revendication 3, **caractérisé par le fait que** la forme extérieure de la bague de codage (4) est un hexagone équilatéral.

5. Actionneur rotatif (1) selon l'une quelconque des revendications 3 ou 4, **caractérisé par le fait que** les angles du polygone équilatéral sont arrondis.

6. Actionneur rotatif (21) selon l'une quelconque des revendications 1 ou 2, **caractérisé par le fait que** la forme extérieure de ladite bague de codage (24) constitue pour l'essentiel un ovale.

7. Actionneur rotatif (1, 21) selon l'une quelconque des revendications 1 à 6, **caractérisé par le fait que** ledit élément élastique (5, 7, 25, 27) est un ressort.

8. Actionneur rotatif (1, 21) selon la revendication 7, **caractérisé par le fait que** ledit ressort est un ressort à lame ou une barre de torsion.

9. Actionneur rotatif (1, 21) selon la revendication 8, **caractérisé par le fait que** le ressort à lame forme une corde de ladite manette (2, 22).

10. Actionneur rotatif (1, 21) selon l'une quelconque des revendications 1 à 9, **caractérisé par le fait que** ledit moyen (6, 26) de blocage de la rotation de la bague de codage est un électro-aimant.

11. Actionneur rotatif (1, 21) selon l'une quelconque des revendications 1 à 10, **caractérisé par** des moyens de réalisation d'un arrêt de rotation.

12. Actionneur rotatif (1, 21) selon la revendication 11, **caractérisé par le fait que**, dans le cas des moyens de réalisation de l'arrêt de rotation, il s'agit d'un ressort s'engrenant dans un contour à crans d'arrêt.

13. Actionneur rotatif (1, 21) selon l'une quelconque des revendications 1 à 12, **caractérisé par** des moyens de réalisation d'une butée de fin de course pour la manette (2, 22).

14. Actionneur rotatif (21) selon l'une quelconque des revendications 1 à 13, **caractérisé par** un évidement (29, 31) ménagé dans ladite bague de codage (24), dans lequel s'engage un taquet (30, 32) disposé sur la manette (22).
